# EUROPEAN PATENT SPECIFICATION

(11) **EP 2 676 881 B1**
(45) Date of publication and mention of the grant of the patent: **06.01.2016**
(21) Application number: 12172981.8
(22) Date of filing: 21.06.2012
(51) Int. Cl.: B64D 13/06

(54) **Aircraft comprising a cooling system for operation with a two-phase refrigerant**
Flugzeug mit einem Kühlsystem zum Betrieb mit einem Zweiphasenkühlmittel
Avion comportant un système de refroidissement pour fonctionnement avec réfrigérant à deux phases

(43) Date of publication of application: 25.12.2013
(73) Proprietor: Airbus Operations GmbH, 21129 Hamburg (DE)
(72) Inventor: Dip.-Ing. Piesker, Markus, 21129 Hamburg (DE); Dipl.-Ing. Sieme, Martin, 21129 Hamburg (DE); Dipl.-Ing. Kiryaman, Ahmet Kayihan, 21129 Hamburg (DE)
(74) Representative: Schicker, Silvia

(56) References cited:
- EP-A1- 1 584 506
- WO-A1-2007/084138
- WO-A1-2007/088012
- US-B1- 7 305 842

## Description

The invention relates to an aircraft comprising a cooling system for operation with a two-phase refrigerant.

Cooling systems for operation with a two-phase refrigerant are known from DE 10 2006 005 035 B3, WO 2007/088012 A1, DE 10 2009 011 797 A1 and US 2010/0251737 A1 and may be used to cool various cooling energy consumers present on board an aircraft such as, for example, food that is intended to be supplied to the passengers or heat generating components such as electric or electronic components. In the cooling systems known from DE 10 2006 005 035 B3, WO 2007/088012 A1, DE 10 2009 011 797 A1 and US 2010/0251737 A1 the phase transitions of the refrigerant flowing through the circuit that occur during operation of the system allow the latent heat consumption that then occurs to be utilized for cooling purposes. The refrigerant mass flow needed to provide a desired cooling capacity is therefore markedly lower than for example in a liquid cooling system, in which a one-phase liquid refrigerant is used.

Consequently, the cooling systems described in DE 10 2006 005 035 B3, WO 2007/088012 A1, DE 10 2009 011 797 A1 and US 2010/0251737 A1 may have lower tubing cross sections than a liquid cooling system with a comparable cooling capacity and hence have the advantages of a lower installation volume and a lower weight. What is more, the reduction of the refrigerant mass flow makes it possible to reduce the conveying capacity needed to convey the refrigerant through the cooling circuit of the cooling system. This leads to an increased efficiency of the system because less energy is needed to operate a corresponding conveying device, such as for example a pump, and moreover less additional heat generated by the conveying device during operation of the conveying device has to be removed from the cooling system.

A cooling system for operation with a two-phase refrigerant which is installed in an aircraft usually serves to provide cooling energy to cooling energy consumers arranged in a cabin of the aircraft. The two-phase refrigerant therefore has to be conveyed into and through a region of the aircraft which is occupied with passengers and crew members. Typical two-phase refrigerants for use in aircraft cooling systems such as, for example, CO₂ or R134A (CH₂F-CF₃) evaporate when being subjected to the ambient conditions prevailing in an aircraft cabin during normal operation of the aircraft. A leakage of refrigerant from the cooling system, for example due to a defect or a malfunctioning of the cooling system, and in particular a leakage of the cooling system in the region of the aircraft cabin is undesirable.

US 7,305,842 B1 relates to environmental control units for aircraft that have pressurized cabins. Fresh air is introduced into the pressurized cabin by compressing ambient air to a pressure that matches, or slightly exceeds, the pressure within the pressurized cabin. An aircraft pressurization dumb valve maintains a preselected pressure within the pressurized cabin. A vapor cycle refrigerant condenser coil is present within a heat exchanger. Refrigerant compressed by a vapor cycle compressor cools a refrigerant expansion coil in the aircraft cabin. A blower circulates air through the expansion coil, thereby cooling the aircraft cabin. A vapor cycle expansion valve can be used to control the flow of refrigerant through the refrigerant expansion coil. The heat exchanger is used to heat or cool the compressed air generated by the air pump assembly, prior to the compressed air entering the pressurized cabin.

EP 1 584 506 A1 relates to a refrigeration system for use in an automotive air conditioner containing a refrigerant gas harmful to a human body. The system comprises a compressor, a condenser, a receiver/dryer that separates the condensed refrigerant into gaseous and liquid phases, while temporarily storing the refrigerant circulating through the refrigeration cycle, an expansion device that throttles and expands liquid refrigerant, and an evaporator that evaporates the expanded refrigerant and returns the refrigerant to the compressor. The expansion device comprises an electromagnetic valve that opens and closes piping on the inlet side of the evaporator, an expansion valve that throttles and expands liquid refrigerant, and a check valve disposed in piping on the outlet side of the evaporator. The check valve forms a backflow-preventing section that prevents backflow of refrigerant from the compressor to the evaporator. The evaporator is disposed in a space leading to the vehicle compartment. The expansion device, e.g., is disposed at a partition wall separating between the compartment and the engine room. When the operation of the air conditioner is stopped, first, the electromagnetic valve is closed to block a refrigerant passage between the receiver/dryer and the expansion valve. When the compressor has stopped and ceased to produce suction of refrigerant, the pressure present in the evaporator becomes lower than the pressure on the suction side of the compressor. In this case, the check valve is closed by the pressure difference to prevent refrigerant in the piping on the suction side of the compressor from flowing back into the evaporator.

The invention is directed to the object to provide an aircraft equipped with a cooling system for operation with a two-phase refrigerant which allows preventing refrigerant leaking from the cooling system in the pressurized region of the aircraft. This object is achieved by an aircraft having the features of claim 1.

In the context of the present application the term "pressurized region" designates an aircraft region which during flight may be pressurized so as to increase the pressure in said aircraft region above the low pressure prevailing outside the aircraft at high altitudes. The pressurized region of the aircraft may comprise a cabin of the aircraft, the cabin including for example a passenger cabin area, a cockpit, a crew rest compartment, a freight compartment, etc.. Of course, the aircraft region which herein is designated as a pressurized region of the aircraft during certain operational phases of the aircraft, for example during groung operation or during flight at low altitudes may also be not pressurized. To the contrary, the term "unpressurized region" in the context of the present application designates an aircraft region which also during flight at high altitudes is not pressurized. The pressure prevailing in the pressurized region of the aircraft thus during all operational phases of the aircraft corresponds to the pressure prevailing outside the aircraft. The unpressurized region of the aircraft may, for example, comprise a belly fairing or a tail cone of the aircraft. The term "ambient air" in the context of the present application designates the air in the pressurized region of the aircraft.

An aircraft according to the invention comprises a cooling system which is in particular suitable for cooling heat generating components or food. The cooling system comprises a cooling circuit allowing circulation of a two-phase refrigerant therethrough. The two-phase refrigerant circulating in the cooling circuit is a refrigerant, which upon releasing cooling energy to a cooling energy consumer is converted from the liquid to the gaseous state of aggregation and is then converted back to the liquid state of aggregation. The two-phase refrigerant may for example be R134A (CH₂F-CF₃). Electric or electronic systems, such as avionic systems or fuel cell systems usually have to be cooled at a higher temperature level than food. For cooling these systems, for example Galden^{®} can be used as a two-phase refrigerant. Preferably, however, CO₂ is employed as the two-phase refrigerant. Although not being non-hazardous to the health of people staying in a cabin of the aircraft in the event of a leakage of the cooling system, CO₂ is at least substantially environment-neutral. If desired, an odorant may be mixed to the refrigerant so that refrigerant leaking from the cooling system due to a defect or a malfunctioning of the cooling system may be smelled by people being subjected to the refrigerant vapor.

An evaporator of the cooling system, which forms an interface between the cooling circuit and a cooling energy consumer, is disposed in a first section of the cooling circuit and has a refrigerant inlet and a refrigerant outlet. The evaporator may, for example, be a heat exchanger which provides for a thermal coupling of the refrigerant flowing through the cooling circuit and a fluid to be cooled, such as for example air to be supplied to mobile transport containers for cooling food stored in the mobile transport containers or any heat generating component on board the aircraft. The two-phase refrigerant is supplied to the refrigerant inlet of the evaporator in its liquid state of aggregation. Upon releasing its cooling energy to the cooling energy consumer, the refrigerant is evaporated and thus exits the evaporator at the refrigerant outlet in its gaseous state of aggregation.

The cooling system further comprises a condenser, which is disposed in a second section of the cooling circuit and has a refrigerant inlet and a refrigerant outlet. The refrigerant which is evaporated in the evaporator, via a portion of the cooling circuit downstream of the evaporator and upstream of the condenser, is supplied to the refrigerant inlet of the condenser in its gaseous state of aggregation. In the condenser, the refrigerant is condensed and hence exits the condenser at the refrigerant outlet of the condenser in its liquid state of aggregation. The condenser may be a part of a chiller or can be supplied with cooling energy from a chiller. For example, the condenser may comprise a heat exchanger which provides for a thermal coupling of the refrigerant flowing through the cooling circuit and a cooling circuit of a chiller.

Refrigerant condensed in the condenser may be immediately directed back to the evaporator. It is, however, also conceivable to provide the cooling system with at least one accumulator which may be disposed in the second section of the cooling circuit downstream of the condenser and thus can be supplied with liquid refrigerant from the condenser. Suitable valves may be provided for controlling the supply of refrigerant from the condenser to the accumulator(s) and/or from the accumulator(s) to the evaporator. Moreover, a super-cooler may be associated with the condenser which serves to super-cool the liquid refrigerant and to thus prevent an undesired evaporation of the refrigerant.

A first cooling circuit control valve is disposed in the cooling circuit between the refrigerant outlet of the evaporator and the refrigerant inlet of the condenser. Further, a second cooling circuit control valve is disposed in the cooling circuit between the refrigerant outlet of the condenser and the refrigerant inlet of the evaporator. In their closed state, the first and the second cooling circuit control valve are adapted to seal the first section of the cooling circuit from the second section of the cooling circuit. The second section of the cooling circuit together with the cooling system components disposed in the second section of the cooling circuit is installed in an unpressurized region of the aircraft. For example, the second section of the cooling circuit may be in installed in the tail cone or the belly fairing of the aircraft.

The first section of the cooling circuit is installed in a pressurized region, i.e. a cabin of the aircraft. The evaporator of the cooling system is installed in the aircraft cabin when said evaporator serves to provide cooling energy to a cooling energy consumer which is also installed in the aircraft cabin.

In the event of a leakage occurring in the cooling system, by closing the first and the second cooling circuit control valve, the first and the second section of the cooling circuit can be sealed from each other. Hence, the maximum amount of refrigerant exiting the cooling system in the event of a leakage of the cooling system is reduced to the amount of refrigerant contained in the section of the cooling circuit which is affected by the leakage, i.e. either the first or the second section of the cooling circuit. If desired, the cooling system may comprise more than two valves which are adapted to seal selected areas of the cooling circuit from each other so as to further reduce the maximum amount of refrigerant exiting the cooling system in the event of a leakage of the cooling system.

Further, the installation of the second section of the cooling circuit including the cooling system components disposed in said second cooling circuit section in an unpressurized region of the aircraft enables refrigerant exiting from the cooling system due to a leakage of the second section of the cooling circuit to be vented to the environment without harming people staying in the aircraft cabin, i.e. a pressurized region of the aircraft. In particular cooling system components containing a large amount of refrigerant, such as accumulators, storage containers and the like, preferably should be disposed in the second section of the cooling circuit and thus installed in an unpressurized region of the aircraft so as to allow the refrigerant to be vented to the environment in the event of a leakage of the second section of the cooling circuit. The aircraft according to the invention thus allows to considerably minimize the health risk for people staying in the aircraft cabin due to a contamination of the ambient air in the aircraft cabin with refrigerant leaking from the cooling system, for example due to a defect or a malfunctioning of the cooling system.

The cooling system employed in the aircraft according to the invention may further comprise a first bleed valve arrangement which in its open state is adapted to discharge refrigerant from the first section of the cooling circuit to the aircraft environment and/or to an unpressurized region of the aircraft. Alternatively or additionally thereto, the cooling system may comprise a second bleed valve arrangement which in its open state is adapted to discharge refrigerant from the second section of the cooling circuit to the aircraft environment and/or to an unpressurized region of the aircraft.

By venting refrigerant from the cooling circuit of the cooling system to the aircraft environment and/or to an unpressurized region of the aircraft, the amount of refrigerant which in the event of a defect or a malfunctioning of the cooling system may enter the aircraft cabin and harm people staying in the aircraft cabin can further be minimized. Further, by discharging refrigerant from the cooling system to the aircraft environment and/or to an unpressurized region of the aircraft, an uncontrolled pressure increase in the cooling system or selected cooling system components may be prevented which may otherwise result from liquid refrigerant being enclosed in the first or the second section of the cooling circuit as a result of the closing of the first and the second cooling circuit control valve.

The cooling system may further comprise a control device which is configured to control the first and/or the second cooling circuit control valve, the first bleed valve arrangement and/or the second bleed valve arrangement in dependence on at least one sensor signal supplied to the control device. The sensor signal may for example be indicative of a pressure of the refrigerant in the cooling circuit of the cooling system. For example, a sudden pressure drop occurring during normal operation of the cooling system, by the control device, may be interpreted as indicative of a leakage of the cooling system and, hence, cause the control device to close the first and the second cooling circuit control valve so as to seal the first and the second section of the cooling system cooling circuit from each other. To the contrary, when the first and the second cooling circuit control valve are closed, a pressure increase in the first and/or the second section of the cooling circuit above a predetermined threshold value may trigger the control device to control the first bleed valve arrangement and/or the second bleed valve arrangement in its/their open state so as to discharge refrigerant from the first and/or the second section of the cooling circuit.

Alternatively or additionally thereto, the control device may be adapted to evaluate a sensor signal indicative of a concentration of the refrigerant in the ambient air in a pressurized region of the aircraft. For example, at least one sensor for measuring the concentration of the refrigerant in the ambient air may be installed in the aircraft cabin. This sensor may be associated exclusively to the cooling system, but also may form a part of the air quality monitoring system of an aircraft air conditioning system. In case CO₂ is employed in the cooling system as the two-phase refrigerant, a sensor for measuring the CO₂ concentration in the ambient air in the aircraft cabin, due to the specific weight of CO₂ being higher than the specific weight of air, preferably is placed close to the floor of the aircraft cabin.

In case a concentration of the refrigerant in the ambient air in the pressurized region of the aircraft exceeds a predetermined threshold value, the control device may close the first and the second cooling circuit control valve so as to seal the first and the second section of the cooling system cooling circuit from each other. Further, the control device may control the first and/or the second bleed valve arrangement so as to allow refrigerant to be vented from the cooling system. Additionally or alternatively thereto, the control device may also be adapted to output a visually or acoustically recognizable warning signal. Further, the control device may be adapted to control an actuating mechanism of an oxygen mask system of the aircraft. The actuating mechanism may cause oxygen masks to drop from a ceiling of the aircraft cabin so as to become accessible to the passengers and the crew members staying in the aircraft cabin, if the refrigerant concentration in the breathing air in the aircraft cabin exceeds a predetermined threshold value.

The control device may further be adapted to evaluate a sensor signal or a plurality of sensor signals indicative of an amount of refrigerant present in the cooling circuit of the cooling system. For example, the amount of refrigerant present in the cooling circuit of the cooling system may be determined by measuring the level of the refrigerant in an accumulator, the pressure of the refrigerant, and the temperature of the refrigerant. The amount of refrigerant present in the cooling circuit of the cooling system may be determined continuously or at specific time intervals. If desired, a first measurement upon start-up of the system may be used as a reference measurement and compared at least to a measurement performed during or after system shut-down.

A considerable decrease of the amount of refrigerant in the cooling circuit of the cooling system during operation of the cooling system may be indicative of a leakage of the cooling system. In case the refrigerant loss is low, the control device may simply initiate shut-down of the operation of the cooling system. In the event of a refrigerant leakage which may cause harm to people on board the aircraft, the control device, however, may also control the first and the second cooling circuit control valve so as to seal the first and the second section of the cooling system cooling circuit from each other and/or to discharge refrigerant from the cooling system to the aircraft environment and/or to an unpressurized region of the aircraft by means of the first and/or the second bleed valve arrangement.

Moreover, the control device may be adapted to evaluate at least one sensor signal indicative of a system failure affecting proper operation of the cooling system. For example, the control device may be adapted to close the first and the second cooling circuit control valve so as to seal the first and the second section of the cooling system cooling circuit from each other and/or control the first and/or the second bleed valve arrangement so as to discharge refrigerant from the cooling system cooling circuit to the aircraft environment and/or to an unpressurized region of the aircraft in the event of a power failure or a malfunctioning of the condenser.

Finally, the control device may be adapted to evaluate at least one sensor signal indicative of a predefined operating state of the aircraft. The predefined operating state of the aircraft may be an emergency operating state, for example prior to an intended emergency landing or in case of a fire on board the aircraft. For example, the control device may be adapted to close the first and the second cooling circuit control valve so as to seal the first and the second section of the cooling system cooling circuit from each other and/or control the first and/or the second bleed valve arrangement so as to discharge refrigerant from the cooling system cooling circuit to the aircraft environment and/or to an unpressurized region of the aircraft when an emergency operating state of the aircraft is detected.

At least one component of the cooling system which is installed in a pressurized region of the aircraft may comprise an encasement. The encasement may be adapted to receive refrigerant leaking from the at least one component of the cooling system. The at least one component of the cooling system may, for example, be a tubing, in particular a tubing forming a component of the first section of the cooling circuit or the evaporator. The encasement may be sealed against the environment so as to avoid refrigerant leaking from the encased component to contaminate the ambient air in the pressurized region of the aircraft. Preferably, the encasement is connectible to the aircraft environment and/or an unpressurized region of the aircraft so as to be able to vent refrigerant from the encasement to the aircraft environment and/or the unpressurized region of the aircraft. At least one sensor for measuring the pressure and/or the concentration of the refrigerant in the encasement may be provided. The signals of the at least one sensor may be evaluated by the control unit for controlling the first and/or the second cooling circuit control valve, the first bleed valve arrangement and/or the second bleed valve arrangement.

The installation of cooling system components in an encasement preventing refrigerant leaking from the cooling system components to enter a pressurized region of the aircraft allows to significantly reduce the risk that people staying in a pressurized region of the aircraft are harmed by a refrigerant contamination of the breathing air in the pressurized region of the aircraft. Further, in particular when at least one sensor for measuring the pressure and/or the refrigerant concentration in the encasement is present, localization of a leakage of the cooling system is simplified. Encasements, however, undesirably add to the weight of the cooling system.

A control device of the cooling system preferably is configured to control the operation of the cooling system upon system start-up such that refrigerant is liquefied in the condenser while the first cooling circuit control valve and the second cooling circuit control valve are closed so as to separate the first section of the cooling circuit from the second section of the cooling circuit. In other words, the condenser is operated so as to liquefy refrigerant while the refrigerant still is not conveyed to the evaporator. The liquefaction of the refrigerant in the condenser is continued until the amount of liquid refrigerant is sufficient to allow a flooding of cooling system components which are disposed in the cooling circuit downstream of a conveying device for conveying refrigerant through the cooling circuit with liquid refrigerant. The liquid refrigerant may be stored in an accumulator.

Advantageously, the control device is configured to operate the condenser during the start-up operational phase of the cooling system at a low operating temperature, i.e. an operating temperature that is lower than the operating temperature of the condenser during normal operation of the cooling system, so as to allow super-cooling of the liquid refrigerant. Alternatively or additionally thereto, a separate super-cooler or a super-cooler which is integrated into the condenser may be employed so as to ensure the desired super-cooling of the refrigerant during the start-up operational phase of the cooling system.

An operating state of the cooling system wherein the condenser is operated so as liquefy refrigerant, although the amount of liquid refrigerant present in the cooling circuit is already sufficient to allow the desired flooding of cooling system components, while the supply of refrigerant to the evaporator, however, still is interrupted, in the following is designated as a stand-by operational state of the cooling system. When the cooling system is in the stand-by operational state, the desired flooding of the cooling system components with liquid refrigerant and the supply of liquid refrigerant to the evaporator may be initiated so as to allow start of normal operation of the cooling system wherein the cooling system provides cooling energy to at least one cooling energy consumer. It is, however, also possible to simply cease operation of the condenser of a cooling system operating in the stand-by operational state so as to shut-down the cooling system.

Preferably, a control device of the cooling system is configured to control the operation of the cooling system in such a way that the cooling system is operated in its stand-by operational state as long as possible. Operation of the cooling system in the stand-by operational state allows to immediately recognize operational failures and, in particular, leakages of the system which may not be noticed when the system is shut off. The operational safety of the cooling system operated in its stand-by operational state, however, still is particularly high, since the supply of refrigerant to the first section of the cooling circuit and thus into a pressurized region of the aircraft still is interrupted.

System start-up until the stand-by operational state of the cooling system is reached therefore may be initiated by the control device, although there are still no cooling energy requirements from cooling energy consumers supplied with cooling energy by the cooling system during normal operation of the cooling system. For example, initiating the start-up procedure of the cooling system may be made subject of a checklist which is processed during a flight preparation operational phase of the aircraft. The stand-by operation of the cooling system may be terminated and normal operation of the cooling system including operation of the evaporator may be started as soon as cooling energy has to be supplied to the cooling energy consumers provided with cooling energy by the cooling system.

A control device of the cooling system may further be configured to control the supply of refrigerant to the evaporator during normal operation of the cooling system in dependence on the operational state of the evaporator, i.e. the cooling energy requirement of the cooling energy consumer coupled to the evaporator, such that a dry evaporation of the refrigerant occurs in the evaporator. This allows an operation of the cooling system with a limited amount of refrigerant circulating in the cooling circuit. As a result, the static pressure of the refrigerant prevailing in the cooling circuit in the non-operating state of the cooling system is low, even at high ambient temperatures. In addition, the health risk for people staying in the aircraft cabin due to a contamination of the ambient air in the aircraft cabin with refrigerant leaking from the cooling system is further reduced.

The supply of refrigerant to the evaporator may be is controlled by suitably controlling a respective valve which is disposed in the cooling circuit upstream of the evaporator. The valve may comprise a nozzle for spraying the refrigerant into the evaporator and to distribute the refrigerant within the evaporator. The spraying of the refrigerant into the evaporator may be achieved, for example, by supplying refrigerant vapor from the evaporator to the nozzle of the valve and/or by evaporation of the refrigerant due to a pressure decrease of the refrigerant downstream of the valve.

To ensure occurrence of a dry evaporation in the evaporator, a predetermined amount of refrigerant may be supplied to the evaporator by appropriately controlling the valve. Then, a temperature TK1 of the refrigerant at the refrigerant inlet of the evaporator and a temperature TA2 of the fluid to be cooled by the evaporator, for example air supplied to the cooling energy consumer, may be measured, preferably while a fan conveying the fluid to be cooled to the cooling energy consumer is running. Further, the pressure of the refrigerant in the evaporator or at the refrigerant outlet of the evaporator may be measured. If a temperature difference between the temperature TA2 of the fluid to be cooled by the evaporator and the temperature TK1 of the refrigerant at the refrigerant inlet of the evaporator exceeds a predetermined threshold value, for example 8K, and the pressure of the refrigerant in the evaporator lies within a predetermined range, the refrigerant supplied to the evaporator is thoroughly evaporated and possibly also super-heated by the evaporator. Hence, the valve again may be controlled so as to supply a further predetermined amount of refrigerant to the evaporator.

A control device of the cooling system further may be configured to control the operation of the cooling system upon system shut-down such that the supply of refrigerant to the evaporator is interrupted, while liquefaction of refrigerant in the condenser is continued. During this operational phase of the cooling system the first and the second cooling circuit control valve, however, are still open such that the first and the second section of the cooling circuit are still connected to each other. The continued liquefaction of the refrigerant present in the cooling system results in a pressure decrease in the cooling circuit, and thus in an evaporation of residual liquid which may be present, in particular, in the first section of the cooling circuit. An evaporation of residual liquid present in the first section of the cooling circuit and the removal of this refrigerant from the first section of the cooling circuit allows to prevent that this refrigerant evaporates when the cooling system is shut off, for example due to high ambient temperatures, and causes the built-up of an undesirable high pressure in the first section of the cooling circuit.

Preferably, the control device is configured to operate the condenser at a low operating temperature, i.e. an operating temperature which is lower than the operating temperature of the condenser during normal operation of the cooling system. A low operating temperature of the condenser increases the pressure drop occurring in the cooling system during the shut-down procedure and, as a result, supports the evaporation of residual liquid present in cooling circuit.

The operating temperature of the condenser and thus the amount of refrigerant which may be liquefied in the condenser, however, is limited by the design of the condenser and the thermodynamic properties of the refrigerant. Further, the pressure of the refrigerant in the cooling system or at specific locations in the cooling system may be measured with a higher accuracy than the temperature of the refrigerant in the cooling system or at specific locations in the cooling system. Therefore, the control device is configured to use the pressure of the refrigerant in the cooling system or at specific locations in the cooling system as a control parameter for controlling the operation of the cooling system, in particular the operation of the condenser and the operation of control valves which control the flow of refrigerant through the cooling circuit. Specifically, the control device may be configured to continue the shut-down procedure involving an interruption of the supply of refrigerant to the evaporator and a continued liquefaction of refrigerant in the condenser until a pressure of the refrigerant in the cooling system which may be measured at different locations in the cooling system or at a specific location in the cooling system has reached a predetermined set value.

The predetermined set value of the pressure of the refrigerant in the cooling system preferably is lower than a value of the pressure of the refrigerant in the cooling system during normal operation of the cooling system. By continuing the shut-down procedure until the pressure of the refrigerant in the cooling system is lower than during normal operation of the cooling system, the desired evaporation of residual liquid refrigerant as described above is ensured.

A control device of the cooling system preferably further is configured to close the first and the second cooling circuit control valves so as to separate the first section of the cooling circuit from the second section of the cooling circuit when the pressure of the refrigerant in the cooling system has reached the predetermine set value. In this operational state of the cooling system, an essential amount of refrigerant present in the cooling system is liquefied, i.e. only a small amount of refrigerant remains in the first section of the cooling circuit. Hence, in the event of a leakage of the cooling system in the region of the first section of the cooling circuit, only a small amount of refrigerant will enter the pressurized region of the aircraft. When the first and the second cooling circuit control valve are closed, operation of the cooling system in its standby operational state may be continued, i.e. liquefaction of the refrigerant in the condenser may be continued, although the first and the second section of the cooling circuit are sealed from each other. It is, however, also possible to completely shut off the cooling system, i.e. to also cease the operation of the condenser.

A control device of the cooling system preferably is configured to control the operation of the cooling system upon system shut-down such that refrigerant which is liquefied in the condenser is stored in an accumulator which is installed in an unpressurized region of the aircraft. As a result, after complete shut off of the cooling system, the major part of the refrigerant present in the cooling system is stored outside of the pressurized region of the aircraft, i.e. the aircraft cabin. This ensures that in the event of a leakage, the major part of refrigerant present in the cooling system may be discharged to the unpressurized region of the aircraft and finally the aircraft environment without harming people staying in the pressurized region of the aircraft.

The control functions performed during operation of the cooling system as described above may be carried out be a single control unit, for example a central control unit of the cooling system. It is, however, also conceivable to equip the cooling system with a plurality of control units, each of which carries out only selected control tasks. A pipe burst safety valve is associated with each one of the first and the second cooling circuit control valve. A pipe burst safety valve associated with the first cooling circuit control valve may be arranged in the cooling circuit upstream of the first cooling circuit control valve. A pipe burst safety valve associated with the second cooling circuit control valve may be arranged in the cooling circuit downstream of the second cooling circuit control valve. In case a pipe bust should occur in the tubing of the cooling circuit, in particular in the tubing of the first section of the cooling circuit, the pipe burst safety valves immediately close such that the amount of refrigerant exiting the cooling system due to the pipe burst is limited.

The cooling circuit of the cooling system may comprise at least two first sections which are formed separate from each other and which may be sealed from each other. Preferably, the two first sections are at least partially installed in a pressurized region of the aircraft. An evaporator may be disposed in each of the two first cooling circuit sections. For example, at least the evaporators may be be installed in a pressurized region of the aircraft. The evaporators disposed in the two first cooling circuit sections may be operated independently from each other, i.e. it is possible to operate an evaporator disposed in one first cooling circuit section, but not to operate an evaporator disposed in the other first cooling circuit section. This allows a particularly energy efficient operation of the cooling system in case only selected cooling energy consumers associated with selected evaporators require the supply of cooling energy. Further, the system operational reliability of a cooling system comprising two first cooling circuit sections is improved, since in case of an operational failure caused by a lack of refrigerant in the cooling circuit, for example due to a leakage of the cooling system, it may still be possible to operate at least one of two first cooling circuit sections. It is, of course, also conceivable to provide the cooling system with more than two first cooling circuit sections.

A control device of the cooling system may be configured to control the two first cooling circuit control valves and/or the two second cooling circuit control valves in such a manner that only one of the two first sections of the cooling circuit is connected to the second section of the cooling circuit if the amount of refrigerant circulating in the cooling circuit is not sufficient to satisfy the demand of both first cooling circuit sections. Such a control of the cooling system prevents that a lack of refrigerant circulating in the cooling circuit, i.e. a lack of cooling energy produced by the cooling system, leads to a sudden failure of the entire system. Instead, the cooling energy produced by the cooling system is directed to a selected one of the two first cooling circuit sections so as to at least supply of cooling energy to said selected one of the two first cooling circuit sections.

Two first cooling circuit control valves as well as two second cooling circuit control valves may be provided and, in their closed state, may be adapted to seal the two first section of the cooling circuit from the second section of the cooling circuit, preferably independently from each other. This allows to further reduce the amount of refrigerant exiting the cooling system and entering a pressurized aircraft region in the event of a leakage of the cooling system. In addition, localization of a cooling system leakage may be simplified by the possibility to independently seal two first cooling circuit sections from the second cooling circuit section.

The cooling system may further comprise a first additional cooling circuit control valve connected in series with the first cooling circuit control valve. Alternatively or additionally thereto, the cooling system may further comprise a second additional cooling circuit control valve connected in series with the second cooling circuit control valve. Two cooling circuit control valves connected in series improve system redundancy in case of a failure of one of the cooling circuit control valves. In a cooling system comprising two first cooling circuit sections, cooling circuit control valves connected in series may be employed to seal either both or only one of the two first cooling circuit sections from the second cooling circuit section.

At least one cooling system component which is susceptible to pipe burst, for example the evaporator, may be disposed between a respective pair of additional pipe burst valves so as to increase the operational safety of the cooling system 10.

The cooling system may further comprises a bypass line bypassing the evaporator. A pressure relief valve and/or a control valve may be adapted to control the refrigerant flow through the bypass line.

Preferred embodiments of the invention now are described in more detail with reference to the enclosed schematic drawings, wherein
- Figure 1: depicts an overview over a first embodiment of an aircraft cooling system suitable for operation with a two-phase refrigerant,
- Figure 2: depicts an overview over a second embodiment of an aircraft cooling system suitable for operation with a two-phase refrigerant,
- Figure 3: depicts an overview over a third embodiment of an aircraft cooling system suitable for operation with a two-phase refrigerant,
- Figure 4: depicts an overview over a fourth embodiment of an aircraft cooling system suitable for operation with a two-phase refrigerant,
- Figure 5: depicts an overview over a fifth embodiment of an aircraft cooling system suitable for operation with a two-phase refrigerant, and
- Figure 6: depicts an alternative cooling circuit control valve arrangement which may be employed in the cooling system of Figure 5.

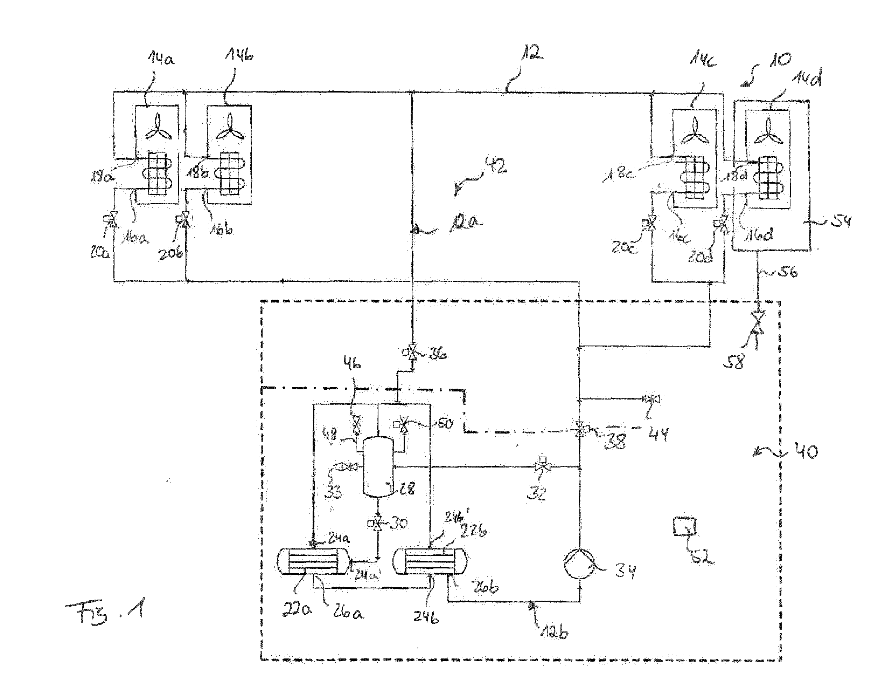

Figure 1 depicts a cooling system 10 which on board an aircraft, for example, may be employed to cool food provided for supplying to the passengers. The cooling system 10 comprises a cooling circuit 12 allowing circulation of a two-phase refrigerant therethrough. The two-phase refrigerant may for example be CO₂ or R134A. Four evaporators 14a, 14b, 14c, 14d are disposed in the cooling circuit 12. Each evaporator 14a, 14b, 14c, 14d comprises a refrigerant inlet 16a, 16b, 16c, 16d and a refrigerant outlet 18a, 18b, 18c, 18d. The refrigerant flowing through the cooling circuit 12 is supplied to the refrigerant inlets 16a, 16b, 16c, 16d of the evaporators 14a, 14b, 14c, 14d in its liquid state of aggregation. Upon flowing through the evaporators 14a, 14b, 14c, 14d the refrigerant releases its cooling energy to a cooling energy consumer which in the embodiment of a cooling system 10 depicted in Figure 1 is formed by the food to be cooled. Upon releasing its cooling energy, the refrigerant is evaporated and hence exits the evaporators 14a, 14b, 14c, 14d at the refrigerant outlets 18a, 18b, 18c, 18d of the evaporators 14a, 14b, 14c, 14d in its gaseous state of aggregation. The supply of refrigerant to the evaporators 14a, 14b, 14c, 14d is controlled by respective valves 20a, 20b, 20c, 20d which are disposed in the cooling circuit 12 upstream of the evaporators 14a, 14b, 14c, 14d, respectively.

Further, the cooling system 10 comprises a first and a second condenser 22a, 22b. Each condenser 22a, 22b has two refrigerant inlets 24a, 24a', 24b, 24b' and a refrigerant outlet 26a, 26b. The refrigerant which is evaporated in the evaporators 14a, 14b, 14c, 14d, via a portion of the cooling circuit 12 downstream of the evaporators 14a, 14b, 14c, 14d and upstream of the condensers 22a, 22b, is supplied to the refrigerant inlets 24a, 24a', 24b, 24b' of the condensers 22a, 22b in its gaseous state of aggregation. The condensers 22a, 22b are thermally coupled to a chiller (not shown in Figure 1). The cooling energy provided by the chiller in the condensers 22a, 22b is used to condense the refrigerant. Thus, the refrigerant exits the condensers 22a, 22b at the refrigerant outlets 26a, 26b of the condensers 22a, 22b in its liquid state of aggregation.

The condensers 22a, 22b may be tube bundle heat exchangers. Tube bundle heat exchangers are robust and may be provided with a receiving space for buffering liquefied refrigerant when the condensers 22a, 22b during operation of the cooling system 10 are at least partially flooded to super-cool the liquefied refrigerant. It is, however, also conceivable to design the condensers 22a, 22b as plate heat exchangers, in particular if a separate super-cooler for super-cooling the liquefied refrigerant is associated with at least one of the condensers 22a, 22b.

Refrigerant circulating in the cooling circuit 12 may be directly supplied to each one of the condensers 22a, 22b. The condensers 22a, 22b, however, are connected in series such that refrigerant exiting the condenser 22a is directed through the condenser 22b so as to ensure sufficient super-cooling of the refrigerant. An accumulator 28 is connected to a refrigerant inlet 24a', 24b' of each one of the condensers 22a, 22b, wherein the supply of refrigerant from the accumulator 28 to the condensers 22a, 22b is controlled by means of a valve 30. Further, the refrigerant outlets 26a, 26b of the condensers 22a, 22b are connected to the accumulator 28 allowing refrigerant liquefied in the condensers 22a, 22b to be supplied into the accumulator. The supply of refrigerant from the condensers 22a, 22b to the accumulator 28 is controlled by means of a valve 32.

The accumulator 28 comprises an adaptor connector 33 having a pressure regulating function via which refrigerant may be introduced into the cooling system 10 or discharged from the cooling system 10, for example during maintenance of the cooling system 10. A conveying device 34, which is embodied in the form of a pump, serves to convey the refrigerant through the cooling circuit. If desired, an air vessel (not shown in Figure 1) may be provided in the cooling circuit 12 downstream of the conveying device 34 so as to dampen pressure surges resulting from the operation of the conveying device 34 or the cooling system valves. Specifically, the air vessel may be arranged in the cooling circuit 12 in a manner that it is not possible to flood the air vessel with liquid refrigerant so as to ensure that the air vessel contains a sufficient amount of gas during all operational phases of the cooling system 10.

The accumulator 33 is installed above the condensers 22a, 22b and the conveying device 34 is installed below the condensers 22a, 22b. Hence, the conveying device 34 is arranged relative to the accumulator 33 and the condensers 22a, 22b in such a position that for the conveying device 34 a positive minimum inflow level, which is defined by the level of a liquid column above an inflow edge of a blade of the conveying device 34, is maintained. The gravity of the liquid column causes a defined pressure increase in the refrigerant supplied to the conveying device 34 thus providing for a super-cooling of the refrigerant and thereby preventing evaporation of the refrigerant due to the pressure reduction caused by the conveying device 34. Consequently, cavitation of the conveying device 34 is avoided.

A first cooling circuit control valve 36 is disposed in the cooling circuit 12 downstream of the evaporators 14a, 14b, 14c, 14d and upstream of the condensers 22a, 22b. A second cooling circuit control valve 38 is disposed in the cooling circuit 12 upstream of the evaporators 14a, 14b, 14c, 14d and downstream of the condensers 22a, 22b. In their closed state, the first and the second cooling circuit control valves 36, 38 seal a first section 12a of the cooling circuit 12 from a second section 12b of the cooling circuit 12b. The dash-dotted line in Figure 1 indicates the boundary between the first and the second section 12a, 12b of the cooling circuit 12. The second section 12b of the cooling circuit 12, together with the cooling system components disposed in the second section 12b of the cooling circuit 12, is installed in an unpressurized region 40 of the aircraft. For example, the second section 12b of the cooling circuit 12 may be in installed in the tail cone or the belly fairing of the aircraft. The unpressurized region 40 of the aircraft is connected to the aircraft environment, for example by louvers or suitable vent openings.

The first section 12a of the cooling circuit 12 is at least partially installed in a pressurized region, i.e. a cabin 42 of the aircraft. In particular, the evaporators 14a, 14b, 14c, 14d, tubing portions employed in the cooling circuit 12 and the valves 20a, 20b, 20c, 20d are installed in the aircraft cabin 42.

The cooling system 10 further comprises a first pressure relief valve 44 which, via a connecting line 48 is connected to the cooling circuit 12 downstream of the first cooling circuit control valve 36 and a second pressure relief valve 46 which is connected to the accumulator 38. The first pressure relief valve 44 thus is associated with the first section 12a of the cooling circuit 12, while the second pressure relief valve 46 is associated with the second section 12b of the cooling circuit 12. Both pressure relief valves 44, 46 are designed as mechanically actuatable valves which automatically open in case a pressure difference acting on the valves 44, 46 exceeds a threshold value which is determined by the design of the valves 44, 46. It is, however, also conceivable to design the pressure relief valves 44, 46 in the form of burst discs or bust discs may be provided in addition to the pressure relief valves 44, 46.

The pressure relief valves 44, 46 thus prevent a pressure in the cooling system 10 to exceed a desired threshold value independent of the operational state of the cooling system 10. It should be noted that the first pressure relief valve 44, although being associated with the first section 12a of the cooling circuit 12 is installed in the unpressurized region 40 of the aircraft. Thus, in the event of an undesired pressure increase in the first section 12a of the cooling circuit 12, the refrigerant present in the first section 12a of the cooling circuit 12, via the first pressure relief valve 44, is discharged into the unpressurized region 40 of the aircraft, where it does not harm people staying in the aircraft cabin 42. Further, the first pressure relief valve 44 acts as a safety valve for the conveying device 34, for example in case of a control failure resulting in an undesired increase of the pressure in the conveying device 34. The first pressure relief valve 44 thus aids to prevent a leakage and/or damage of the conveying device 34.

In the cooling system 10 of Figure 1 the arrangement of the second pressure relief valve 46 close to the accumulator 38 is advantageous, since the accumulator 38 forms an interface between a plurality of cooling system components. Further, the volume of the accumulator 38 allows to dampen pressure variations occurring in the cooling circuit 12. It is, however, also conceivable to install the second pressure relief valve 46 in the aircraft outer skin such that refrigerant discharged from the cooling system 10 via the second pressure relief valve 46 is vented directly to the aircraft environment. A second pressure relief valve 46 installed in the aircraft outer skin may be closed by means of a plug arranged flush with the aircraft outer skin. Absence of the plug then immediately indicates that the second pressure relief valve 46 has been opened.

The cooling system 10 further is provided with a bleed valve arrangement 50 which in its open state serves to discharge refrigerant from the second section 12b of the cooling circuit 12 to the unpressurized region 40 of the aircraft. In the cooling system 10 of Figure 1 the bleed valve arrangement 50 is formed by an electrically actuatable safety valve which is connected to the accumulator 28. Operation of the cooling system 10 is controlled by means of an electronic control unit 52. In particular, the electronic control unit 52 controls operation of the evaporators 14a, 14b, 14c, 14d, the condensers 22a, 22b and the various valves employed in the cooling circuit.

As becomes apparent from Figure 1, the evaporator 14d is received within an encasement 54 which is adapted to receive refrigerant leaking from the evaporator 14d. The encasement 54 is sealed against the environment so as to avoid refrigerant leaking from the evaporator 14d to contaminate the ambient air in the cabin 42 of the aircraft. The encasement 54, however, via a line 56 is connected to the unpressurized region 40 of the aircraft. A control valve 58 is disposed in the line 56 and serves to either open the interior of the encasement 54 to the unpressurized region 40 of the aircraft or to seal the interior of the encasement 54 from the unpressurized region 40 of the aircraft.

In the following, operation of the cooling system 10 will be described. Upon system start-up, the control unit 52 controls the operation of the cooling system 10 such that refrigerant is liquefied in the condensers 22a, 22b, while the first cooling circuit control valve 36 and the second cooling circuit control valve 38 are closed so as to separate the first section 12a of the cooling circuit 12 from the second section 12b of the cooling circuit 12. Further, under the control of the control unit 52, the valves 20a ,20b, 20c, 20d and 30 are closed, while valve 32 is open. The condensers 22a, 22b are operated until the condensers 22a, 22b are at least partially flooded resulting in a super-cooling of the refrigerant. Specifically, the condensers 22a, 22b are operated at a low operating temperature, i.e. an operating temperature that is lower than the operating temperature of the condensers 22a, 22b during normal operation of the cooling system so as to support super-cooling of the refrigerant. Due to the conveying device 34 being arranged below the condensers 22a, 22b the flooding of the condensers 22a, 22b entails that also the conveying device 34 is flooded. Further, since the conveying device 34 is flooded before operation of the conveying device 34 is started, it is not necessary that the conveying device 34 is designed in the form of a self-sucking pump.

When the level of the liquid refrigerant in the conveying device 34 has reached a level which ensures that dry operation of the conveying device 34 is avoided, operation of the conveying device 34 is started. In particular, the operation of the conveying device 34 is started in dependence on a signal indicative of the level of the liquid refrigerant being supplied to the control unit 52. The level of liquid refrigerant may be measured in the condensers 22a, 22b, in the conveying device 34 or downstream of the conveying device 34. Any suitable procedure for measuring the level of the liquid refrigerant may be employed. For example, the level of the liquid refrigerant may be measured using a float gauge or by detecting a physical parameter such as the electrical connectivity or the heat conductivity of the refrigerant. Further, inductive, piezoelectric or ultrasonic measurements may be performed. Finally, it is also conceivable to determine the volume of refrigerant which is already liquefied by means of the condensers 22a, 22b based on a measurement of the pressure difference in the cooling system 10 and the development of the system pressure after starting operation of the condensers 22a, 22b.

When operation of the conveying device 34 is started, the conveying device 34 is operated with a low speed. If desired, the conveying device 34 may be adapted to be operated with a continuously varying speed. It might, however, also be sufficient to set three fixed speeds at which the conveying device 34 may be operated. In this case, the conveying device 34 during a start-up of the cooling system 10 is operated at the lowest speed.

The conveying device 34 conveys refrigerant liquefied in the condensers 22a, 22b into the accumulator 28. This operation is continued until the amount of liquid refrigerant present in the cooling circuit 12 and stored in the accumulator 28 is sufficient to allow that cooling system components which are disposed downstream of the conveying device 34, i.e. the tubing of the cooling circuit 12 and the evaporators 14a, 14b, 14c, 14d can be flooded with liquid refrigerant. The fill level of the liquid refrigerant in the accumulator 28 is measured so as to determine whether enough liquid refrigerant is present to allow the desired flooding of the cooling system components. Further, based on these fill level measurements and based on measurements of the pressure and the temperature of the refrigerant in the cooling system 10, the total amount of refrigerant in the cooling system 10 may be determined.

An operating state of the cooling system 10 wherein the condensers 22a, 22b are operated so as liquefy refrigerant, although the amount of liquid refrigerant present in the cooling circuit 12 is already sufficient to allow the desired flooding of cooling system components, while the supply of refrigerant to the evaporators 14a, 14b, 14c, 14d, however, still is interrupted is designated as a stand-by operational state of the cooling system 10. The control device 52 of the cooling system 10 controls the operation of the cooling system 10 in such a way that the cooling system 10 is operated in its stand-by operational state as long as possible.

The stand-by operational state of the cooling system 10 is terminated and normal operation of the cooling system 10 is initiated when cooling energy has to be supplied to cooling energy consumers. To initiate normal operation of the cooling system 10, the first and the second cooling circuit control valves 36, 38 are opened so as to connect the first section 12a of the cooling circuit 12 to the second section 12b of the cooling circuit 12 and to provide for a pressure equalization between the first and the second section 12a, 12b of the cooling circuit 12. Thereafter, valve 30 is opened such that liquid refrigerant gravity-driven is supplied from the accumulator 28 to the condensers 22a, 22b and further to the components of the cooling system 10 arranged downstream of the condensers 22a, 22b. Upon flowing through the condensers 22a, 22b the refrigerant is super-cooled. Operation of the conveying device 34 is continued.

The supply of refrigerant to the evaporators 14a, 14b, 14c, 14d is controlled by opening the valves 20a, 20b, 20c, 20d. When the valves 20a, 20b, 20c, 20d are open, valve 32 is closed such that refrigerant exiting the condensers 22a, 22b is exclusively conveyed to the evaporators 14a, 14b, 14c, 14d. During further normal operation of the cooling system 10, valve 32 may, however, again be partially closed or entirely closed so as to control the pressure of the refrigerant within the cooling circuit 12 in dependence on the operating state of the evaporators 14a, 14b, 14c, 14d, i.e. in dependence on the cooling energy demand of the cooling energy consumers supplied with cooling energy by the cooling system 10. Further, the pressure of the refrigerant within the cooling circuit 12 and the supply of refrigerant to the evaporators 14a, 14b, 14c, 14d is controlled by appropriately controlling the speed of the conveying device 34. Specifically, the operating speed of the conveying device 34 is increased when the cooling requirement of the cooling energy consumers supplied with cooling energy by the evaporators 14a, 14b, 14c, 14d increases.

During normal operation of the cooling system 10, the second section 12b of the cooling circuit 12 may be considered as a thermodynamically closed system, wherein the refrigerant is in the state of a wet vapor as soon as the first drop of the refrigerant is condensed. Liquefaction of the refrigerant in this closed system substantially follows the isochores, wherein a pressure drop in the second section 12b of the cooling circuit 12 is limited by operating the condensers 22a, 22b at a low temperature. The evaporators 14a, 14b, 14c, 14d should be operated at an evaporation temperature of approximately -5°C. The associated pressure in the wet vapor region is approximately 30.5 bar.

During normal operation of the cooling system 10, i.e. when refrigerant is evaporated in the evaporators 14a, 14b, 14c, 14d so as to supply cooling energy to respective cooling energy consumers, the control unit 52 controls the first cooling circuit control valve 36 such that the pressure in the cooling circuit 12 downstream of the evaporators 14a, 14b, 14c, 14d and upstream of the condensers 22a, 22b is higher than downstream of the condensers 22a, 22b and upstream of the evaporators 14a, 14b, 14c, 14d. Specifically, the first cooling circuit control valve 36 is operated so as to increase or decrease a flow cross-section of the cooling circuit 12 between the evaporators 14a, 14b, 14c, 14d and the condensers 22a, 22b.

The control device 52 during normal operation of the cooling system 10 controls the supply of refrigerant to the evaporators 14a, 14b, 14c, 14d in dependence on the operational state of the evaporators 14a, 14b, 14c, 14d, i.e. the cooling energy requirement of the cooling energy consumers coupled to the evaporators 14a, 14b, 14c, 14d such that a dry evaporation of the refrigerant occurs in the evaporators 14a, 14b, 14c, 14d. The supply of refrigerant to the individual evaporators 14a, 14b, 14c, 14d is controlled by suitably controlling the respective valves 20a, 20b, 20c, 20d.

To shut-down the cooling system 10, the control device 52 controls the operation of the cooling system 10 such that the supply of refrigerant to the evaporators 14a, 14b, 14c, 14d is interrupted, while liquefaction of refrigerant in the condensers 22a, 22b is continued. Liquid refrigerant exiting the condensers 22a, 22b is conveyed into the accumulator 28 through open valve 32. During this operational phase of the cooling system 10 the first and the second cooling circuit control valve 36, 38, however, are still open such that the first and the second section 12a, 12b of the cooling circuit 12 are still connected to each other. The continued liquefaction of the refrigerant present in the cooling system 10 results in a pressure decrease in the cooling circuit 12, and thus in an evaporation of residual liquid which may be present, in particular, in the first section 12a of the cooling circuit 12.

Specifically, the control device 52 controls the condensers 22a, 22b so as to operate at a low operating temperature, i.e. an operating temperature which is lower than the operating temperature of the condensers 22a, 22b during normal operation of the cooling system 10. A low operating temperature of the condenser increases the pressure drop occurring in the cooling system 10 during the shut-down procedure and, as a result, supports the evaporation of residual liquid present in cooling circuit 12.

The control device 52 uses the pressure of the refrigerant in the cooling system 10 or as a control parameter for controlling the operation of the cooling system 10. In particular, the control device 52 continues the shut-down procedure involving an interruption of the supply of refrigerant to the evaporators 14a, 14b, 14c, 14d and a continued liquefaction of refrigerant in the condensers 22a, 22b until a pressure of the refrigerant in the cooling system 12 which may be measured at different locations in the cooling system 12 or at a specific location in the cooling system 12 has reached a predetermined set value. The predetermined set value of the pressure of the refrigerant in the cooling system 12 is lower than a value of the pressure of the refrigerant in the cooling system 12 during normal operation of the cooling system

When the pressure of the refrigerant in the cooling system 12 has reached the predetermine set value, the control device 52 closes the first and the second cooling circuit control valves 36, 38 so as to separate the first section 12a of the cooling circuit 12 from the second section 12b of the cooling circuit 12. In this operational state of the cooling system 10, an essential amount of refrigerant present in the cooling system is liquefied, i.e. only a small amount of refrigerant remains in the first section 12a of the cooling circuit 12. The major part of the refrigerant present in the cooling system 12 is stored in the accumulator 28 which is installed outside of the aircraft cabin 42 in the unpressurized region 40 of the aircraft. The cooling system 10 may be completely shut off by finally ceasing operation of the condensers 22a, 22b.

Further, at least one of the valves 20a, 20b, 20c, 20d may again be opened so as to avoid that the portion of the cooling circuit 12 between the first cooling circuit control valve 36 and the valves 20a, 20b, 20c, 20d is sealed from the first pressure relief valve 44. By opening at least one of the valves 20a, 20b, 20c, 20d the portion of the cooling circuit 12 between the first cooling circuit control valve 36 and the valves 20a, 20b, 20c, 20d may be protected against excess pressure, since refrigerant may be discharged from the portion of the cooling circuit 12 between the first cooling circuit control valve 36 and the valves 20a, 20b, 20c, 20d via the first pressure relief valve 44.

When a leakage occurs in the cooling system 10 while the system 10 is shut off, the amount of refrigerant which may exit the cooling system 10 and contaminate the ambient air in the aircraft cabin 42 is limited to the small amount of refrigerant prevailing in the first section 12a of the cooling circuit 12 after system shut-down. In case a leakage occurs in the cooling system 10 during normal system operation, the control device 52 closes the first and the second cooling circuit control valve 36, 38 so as to seal the first and the second section 12a, 12b of the cooling system cooling circuit 12 from each other. The amount of refrigerant which may exit the cooling system 10 and contaminate the ambient air in the aircraft cabin 42 then again is limited to the amount of refrigerant present in the first section 12a of the cooling circuit 12. In addition, the control device 52 opens the bleed valve arrangement 50 so as to discharge refrigerant from the second section 12b of the cooling circuit 12 into the unpressurized region 40 of the aircraft and to thus minimize the overall amount of refrigerant present in the cooling system 10.

The control unit 52 may control the operation of the first and the second cooling circuit control valve 36, 38 and the bleed valve arrangement 50 in dependence on various sensor signals supplied to the control unit 52. The sensor signals supplied to the control unit 52 may be indicative of a pressure of the refrigerant in the cooling circuit 12 of the cooling system 10, the concentration of the refrigerant in the ambient air in the aircraft cabin 42, an amount of refrigerant present in the cooling circuit 12 of the cooling system 10 and a system failure affecting proper operation of the cooling system. Further, the control unit 52 may close the first and the second cooling circuit control valve 36, 38 and/or open the bleed valve arrangement 50 in dependence on a sensor signal indicative of a predefined operating state of the aircraft, in particular an emergency operating state. For example, the control unit 52 may initiate that the refrigerant is discharged from the cooling system 10 when an emergency landing of the aircraft is intended or in case of a fire on board the aircraft.

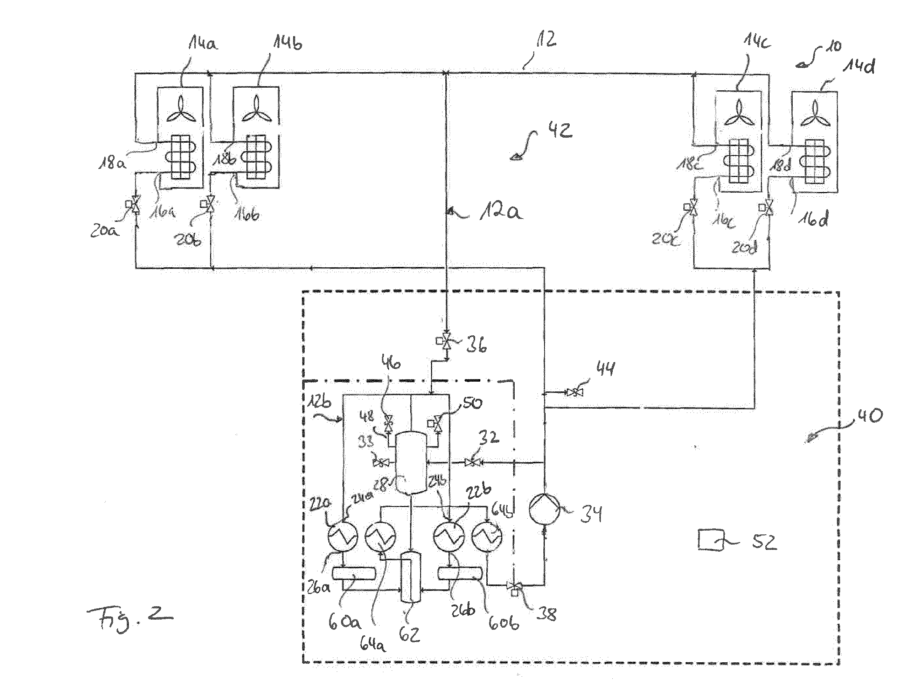

In case a leakage occurs in the evaporator 14d, the refrigerant exiting the evaporator 14d is received within the encasement 54. This refrigerant may be discharged to the unpressurized region 40 of the aircraft via line 56 by opening valve 58. In particular, the control unit 52 opens valve 58 in dependence on a sensor signal indicative of a pressure in the encasement 54 or a refrigerant concentration in the encasement 54. The cooling system 10 according to Figure 2 differs from the arrangement of Figure 1 in that a storage container 60a, 60b is arranged downstream and below each one of the condensers 22a, 22b. The storage containers 60a, 60b, which may also be formed integral with the condensers 22a, 22b are connected to a further accumulator 62 which is arranged downstream and below the storage containers 60a, 60b. Liquid refrigerant may be conveyed gravity-driven from the accumulator 28 and the storage containers 60a, 60b into the further accumulator 62. Valve 30 present in the arrangement of Figure 1 is dispensed with. The storage containers 60a, 60b and the accumulators 28, 62 are dimensioned so as to be able to receive the entire amount of refrigerant present in the cooling system 10 in its liquid state of aggregation. Thus, during system start-up and during stand-by operation of the cooling system, the condensers 22a, 22b may be operated so as to liquefy refrigerant without it being necessary to operate the conveying device 34.

The cooling system 10 further comprises two super-coolers 64a, 64b which are arranged in series in the cooling circuit 12 downstream of the further accumulator 62. The conveying device 34 is installed above the storage containers 60a, 60b and the further accumulator 62 and therefore is designed in the form of a self-sucking pump. Further, the conveying device 34 no longer is disposed upstream, but instead downstream of the second cooling circuit control valve 38. In other words, the conveying device 34 no longer is disposed in the second section 12b of cooling circuit 12, but in the first section 12a of the cooling circuit 12. Therefore the conveying device 34 is less susceptible to leakages and also may be designed so as to be less pressure resistant than in the arrangement of Figure 1. Finally, valve 32 is designed in the form of a mechanically actuated pressure relief valve.

Otherwise, the structure and the operating principle of the cooling system 10 according to Figure 2 correspond to the structure and the operating principle of the arrangement of Figure 1.

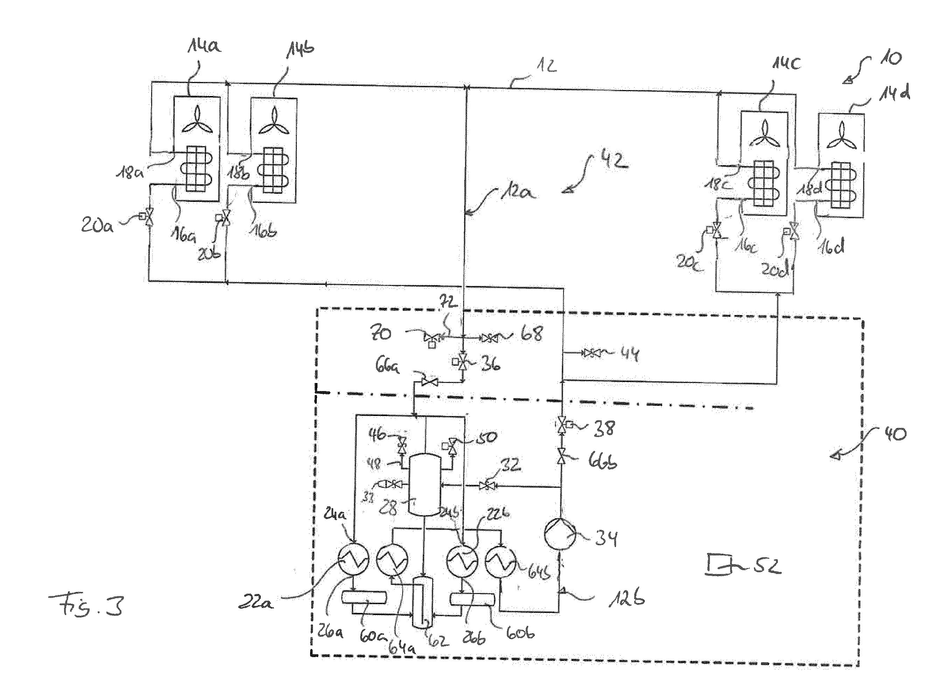

The cooling system 10 according to Figure 3 differs from the arrangement of Figure 2 in that the conveying device 34, like in the arrangement according to Figure 1, again is disposed upstream of the second cooling circuit control valve 38 and thus arranged in the second section 12b of cooling circuit 12. Further, each one of the first and the second cooling circuit control valve 36, 38 is associated with an additional pipe burst safety valve 66a, 66b. The pipe burst safety valve 66a associated with the first cooling circuit control valve 36 is arranged upstream of the first cooling circuit control valve 36. The pipe burst safety valve 66b associated with the second cooling circuit control valve 38 is arranged downstream of the second cooling circuit control valve 38. In case a pipe bust should occur in the tubing of the cooling circuit 12, in particular in the tubing of the first section 12a of the cooling circuit 12, the pipe burst safety valves 66a, 66b immediately close such that the amount of refrigerant exiting the cooling system 10 due to the pipe burst is limited.

The cooling system 10 of Figure 3 further comprises an additional pressure relief valve 68 disposed in the cooling circuit 12 between the evaporators 14a, 14b, 14c, 14d and the first cooling circuit control valve 36. Like the pressure relief valves 44, 46, the additional pressure relief valve 68 is designed as mechanically actuatable valve which automatically opens in case a pressure difference acting on the valve 68 exceeds a threshold value which is determined by the design of the valve 68. Due to the presence of the additional pressure relief valve 68 it is no longer necessary to maintain at least one of the valves 20a, 20b, 20c, 20d open when the system 10 is shut off so as to prevent built-up of an excess pressure in the portion of the cooling circuit 12 between the evaporators 14a, 14b, 14c, 14d and the first cooling circuit control valve 36.

Finally, the cooling system 10 of Figure 3 comprises a bleed valve arrangement 70 which in its open state serves to discharge refrigerant from the first section 12a of the cooling circuit 12 to the unpressurized region 40 of the aircraft. The bleed valve arrangement 70 is formed by an electrically actuatable safety valve which is connected to the first section 12a of the cooling circuit 12 via a connecting line 72. The bleed valve arrangement 70 may be controlled by the control unit 52 as described above in connection with the bleed valve arrangement 50. The additional pressure relief valve 68 and the bleed valve arrangement 70 are connected to a gas line of the cooling circuit 12 extending downstream of the evaporators 14a, 14b, 14c, 14d and thus having a larger flow cross section than a liquid line of the cooling circuit 12 extending upstream of the evaporators 14a, 14b, 14c, 14d. As a result, a large amount of refrigerant can be quickly discharged from the cooling system 10 via the additional pressure relief valve 68 and the bleed valve arrangement 70.

Otherwise, the structure and the operating principle of the cooling system 10 according to Figure 3 correspond to the structure and the operating principle of the arrangement of Figure 2.

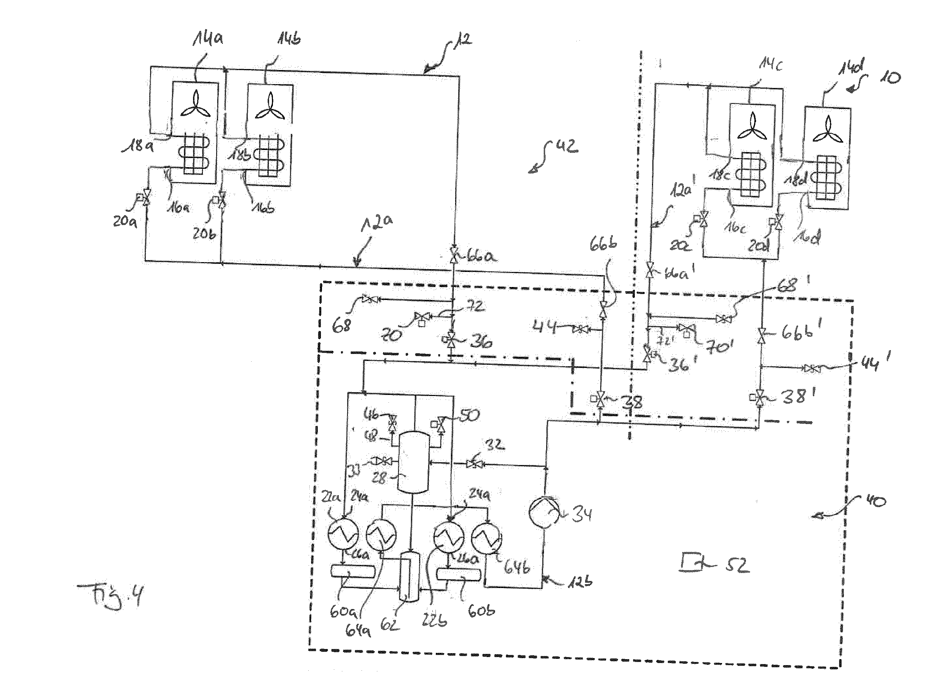

The cooling system 10 according to Figure 4 differs from the arrangement of Figure 3 in that the cooling circuit 12 of the cooling system 10 comprises two first sections 12a, 12a' which are formed separate from each other. Two evaporators 14a, 14b are disposed in the first cooling circuit section 12a, and two evaporators 14c, 14d are disposed in the first cooling circuit section 12a'. A first and a second cooling circuit control valve 36, 38 in their closed state serve to seal the first cooling circuit section 12a from the second cooling circuit section 12b. A first and a second cooling circuit control valve 36', 38' in their closed state serve to seal the first cooling circuit section 12a' from the second cooling circuit section 12b. Pipe burst safety valves 66a, 66a', 66b, 66b' are associated with each of the first and the second cooling circuit control valves 36, 36', 38, 38'. The pipe burst safety valves 66a, 66a', 66b, 66b' may be disposed in the cooling circuit 12 at the positions shown in Figure 4. It is, however, advantageous to install the pipe burst safety valves 66a, 66a', 66b, 66b' in the unpressurized aircraft region 40 so as to allow refrigerant discharged from the cooling system via the pipe burst safety valves 66a, 66a', 66b, 66b' to be vented to the unpressurized aircraft region 40 and finally the aircraft environment.

The cooling system 10 further comprises two first pressure relief valves 44, 44' wherein the first pressure relief valves 44 is associated with the first cooling circuit section 12a, and wherein the first pressure relief valves 44' is associated with the first cooling circuit section 12a'. In addition an additional pressure relief valve 68 is associated with the first cooling circuit section 12a, whereas an additional pressure relief valve 68' is associated with the first cooling circuit section 12a'. Finally two bleed valve arrangements 70, 70' are present, wherein the bleed valve arrangement 70 is associated with the first cooling circuit section 12a, whereas the bleed valve arrangement 70' is associated with the first cooling circuit section 12a'.

The evaporators 14a, 14b, 14c, 14d disposed in the two first cooling circuit sections 12a, 12a' may be operated independently from each other, i.e. it is possible to operate an evaporator 14a, 14b, 14c, 14d disposed in one first cooling circuit section 12a, 12a', but not to operate an evaporator 14a, 14b, 14c, 14d disposed in the other first cooling circuit section 12a, 12a'. Further, by suitable controlling the cooling circuit control valves 36, 36', 38, 38', the two first cooling circuit sections 12a, 12a' may be sealed from the second cooling circuit section 12b independently from each other.

Otherwise, the structure and the operating principle of the cooling system 10 according to Figure 4 correspond to the structure and the operating principle of the arrangement of Figure 3.

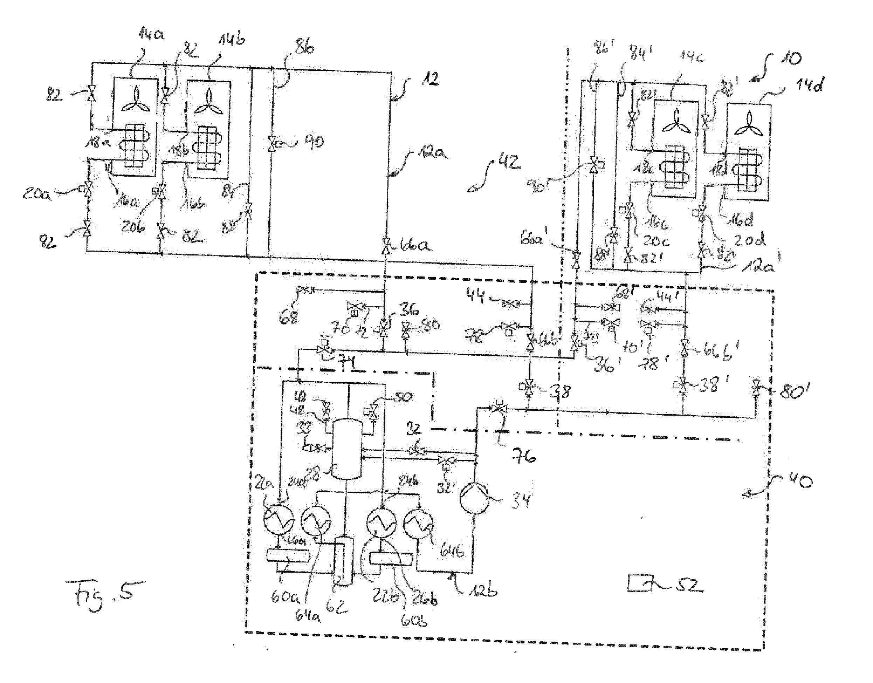

The cooling system 10 according to Figure 5 differs from the arrangement of Figure 4 in that an additional line is provided for connecting an outlet of the conveying device 34 to the accumulator 28. An additional valve 32' is provided to control the supply of refrigerant from the conveying device 34 to the accumulator 28. This arrangement increases redundancy in case of a failure of one of the valves 32, 32'. Further, also for increasing system redundancy, beside the cooling circuit control valves 36, 36', 38, 38', additional cooling circuit control valves 74, 76 are provided which, in their closed state, allow to seal both first cooling circuit sections 12a, 12a' from the second cooling circuit section 12b.

Moreover, additional bleed valve arrangements 78, 78' further improve the operational safety of the cooling system 10, wherein the bleed valve arrangement 78 is associated with the first cooling circuit section 12a, whereas the bleed valve arrangement 78' is associated with the first cooling circuit section 12a'. Further additional pressure relief valves 80, 80' also improve the operational safety of the cooling system 10. Since the evaporators 14a, 14b, 14c, 14d may be susceptible to pipe burst, each one of the evaporators 14a, 14b, 14c, 14d is disposed between a respective pair of additional pipe burst valves 82, 82'. Bypass lines 84, 86, 84', 86' are provided for bypassing the evaporators 14a, 14b and the evaporators 14c, 14d, respectively, wherein the refrigerant flow through bypass lines 84, 84' is controlled by respective pressure relief valves 88, 88', whereas the refrigerant flow through bypass lines 86, 86' is controlled by respective control valves 90, 90'.

Otherwise, the structure and the operating principle of the cooling system 10 according to Figure 5 correspond to the structure and the operating principle of the arrangement of Figure 4.

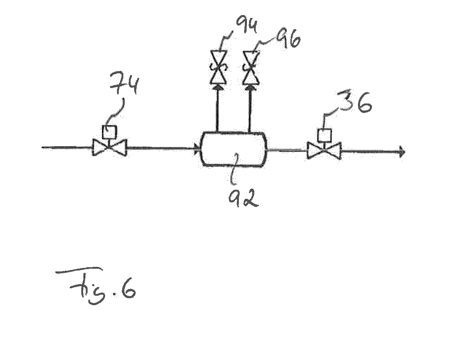

As an alternative to the cooling circuit control valve arrangement shown in Figure 5, an arrangement according to Figure 6 can be employed in the cooling system of Figure 5. The modular arrangement according to Figure 6 comprises two cooling circuit control valves, for example cooling circuit control valves 74 and 36, which are connected in series with a volume 92. Additional pressure relief valves 94, 96 may be employed in the modular arrangement according to Figure 6.

## Claims

1. Aircraft comprising a cooling system (10), wherein the cooling system (10) comprises:
- a cooling circuit (12) allowing circulation of a two-phase refrigerant therethrough,
- an evaporator (14a-d) disposed in a first section (12a) of the cooling circuit (12) and having a refrigerant inlet (16a-d) and a refrigerant outlet (18a-d),
- a condenser (22a, 22b) disposed in a second section (12b) of the cooling circuit (12) and having a refrigerant inlet (24a, 24a', 24b, 24b') and a refrigerant outlet (26a, 26b),
- a first cooling circuit control valve (36) disposed in the cooling circuit (12) between the refrigerant outlet (18a-d) of the evaporator (14a-d) and the refrigerant inlet (24a, 24a', 24b, 24b') of the condenser (22a, 22b), and
- a second cooling circuit control valve (38) disposed in the cooling circuit (12) between the refrigerant outlet (26a, 26b) of the condenser (22a, 22b) and the refrigerant inlet (16a-d) of the evaporator (14a-d), the first and the second cooling circuit control valve (36, 38) in their closed state being adapted to seal the first section (12a) of the cooling circuit (12) from the second section (12b) of the cooling circuit (12), wherein the second section (12b) of the cooling circuit (12) is installed in an unpressurized region (40) of the aircraft and the first section (12a) of the cooling circuit (12) is installed in a pressurized region (42) of the aircraft,
wherein a pipe burst safety valve (66a, 66b) is associated with each one of the first and the second cooling circuit control valve (36, 38).

2. Aircraft according to claim 1,
wherein the cooling system (10) further comprises:
- a first bleed valve arrangement (70) which in its open state is adapted to discharge refrigerant from the first section (12a) of the cooling circuit (12) to the aircraft environment and/or to an unpressurized region (40) of the aircraft, and/or
- a second bleed valve arrangement (50) which in its open state is adapted to discharge refrigerant from the second section (12b) of the cooling circuit (12) to the aircraft environment and/or an unpressurized region (40) of the aircraft.

3. Aircraft according to claim 1 or 2,
wherein a control device (52) of the cooling system (10) is configured to control the first and/or the second cooling circuit control valve (36, 38), the first bleed valve arrangement (70) and/or the second bleed valve arrangement (50) in dependence on at least one sensor signal supplied to the control device (52), the sensor signal being indicative of at least one of
- a pressure of the refrigerant in the cooling circuit (12) of the cooling system (10),
- a concentration of the refrigerant in the ambient air in the pressurized region (42) of the aircraft,
- an amount of refrigerant present in the cooling circuit (12) of the cooling system (10),
- a system failure affecting proper operation of the cooling system (10), and
- a predefined operating state of the aircraft.

4. Aircraft according to any one of claims 1 to 3,
wherein at least one component of the cooling system (10) which is installed in a pressurized region (42) of the aircraft comprises an encasement (54), the encasement (54) being adapted to receive refrigerant leaking from the least one component of the cooling system (10).

5. Aircraft according to any one of claims 1 to 4,
wherein a control device (52) of the cooling system (10) is configured to control the operation of the cooling system (10) upon system start-up such that refrigerant is liquefied in the condenser (22a, 22b) while the first cooling circuit control valve (36) and the second cooling circuit control valve (38) are closed so as to separate the first section (12a) of the cooling circuit (12) from the second section (12b) of the cooling circuit (12) until the amount of liquid refrigerant is sufficient to allow a flooding of cooling system components which are disposed in the cooling circuit (12) downstream of a conveying device (34) for conveying refrigerant through the cooling circuit (12) with liquid refrigerant.

6. Aircraft according to any one of claims 1 to 5,
wherein a control device (52) of the cooling system (10) is configured to control the supply of refrigerant to the evaporator (14a-d) in dependence on the operational state of the evaporator (14a-d) such that a dry evaporation of the refrigerant occurs in the evaporator (14a-d).

7. Aircraft according to any one of claims 1 to 6,
wherein a control device (52) of the cooling system (10) is configured to control the operation of the cooling system (10) upon system shut-down by interrupting the supply of refrigerant to the evaporator (14a-d) while continuing liquefaction of refrigerant in the condenser (22a, 22b) until a pressure of the refrigerant in the cooling system (10) has reached a predetermined set value.

8. Aircraft according to claim 7,
wherein the predetermined set value of the pressure of the refrigerant in the cooling system (10) is lower than a value of the pressure of the refrigerant in the cooling system (10) during normal operation of the cooling system (10).

9. Aircraft according to claim 7 or 8,
wherein a control device (52) of the cooling system (10) is configured to close the first and the second cooling circuit control valve (36, 38) so as to separate the first section (12a) of the cooling circuit (12) from the second section (12b) of the cooling circuit (12) when the pressure of the refrigerant in the cooling system (10) has reached the predetermined set value.

10. Aircraft according to any one of claims 1 to 9,
wherein a control device (52) of the cooling system (10) is configured to control the operation of the cooling system (10) upon system shut-down by storing refrigerant which is liquefied in the condenser (22a, 22b) in an accumulator (28) which is installed in an unpressurized region (40) of the aircraft.

11. Aircraft according to any one of claims 1 to 10,
wherein the cooling circuit (12) comprises two first sections (12a, 12a') which are at least partially installed in the pressurized region (42) of the aircraft , wherein an evaporator (14a-d) is disposed in each of the two first sections (12a, 12a'), and wherein two first cooling circuit control valves (36, 36') as well as two second cooling circuit control valves (38, 38') in their closed state are adapted to seal the two first sections (12a, 12a') of the cooling circuit (12) from the second section (12b) of the cooling circuit (12).

12. Aircraft according to claim 11,
wherein a control device (52) of the cooling system (10) is configured to control the two first cooling circuit control valves (36, 36') and/or the two second cooling circuit control valves (38, 38') in such a manner that only one of the two first sections (12a, 12a') of the cooling circuit (12) is connected to the second section (12b) of the cooling circuit (12) if the amount of refrigerant circulating in the cooling circuit (12) is not sufficient to satisfy the demand of both first cooling circuit sections (12a, 12a').

13. Aircraft according to any one of claims 1 to 12,
wherein the cooling system (10) further comprises a first additional cooling circuit control valve (74) connected in series with the first cooling circuit control valve (36) and/or a second additional cooling circuit control valve (76) connected in series with the second cooling circuit control valve (38), and/or
wherein at least one cooling system component which is susceptible to pipe burst is disposed between a respective pair of additional pipe burst valves (82, 82').

14. Aircraft according to any one of claims 1 to 13,
wherein the cooling system (10) further comprises a bypass line (84, 86, 84', 86') bypassing the evaporator (14a-d), wherein a pressure relief valve (88, 88') and/or a control valve (90, 90') may be adapted to control the refrigerant flow through the bypass line (84, 84', 86, 86').

## Patentansprüche

1. Flugzeug mit einem Kühlsystem (10), wobei das Kühlsystem (10) umfasst:
- einen Kühlkreislauf (12), der von einem zweiphasigen Kühlmittel durchströmbar ist,
- einen Verdampfer (14a-d), der in einem ersten Abschnitt (12a) des Kühlkreislaufs (12) angeordnet ist und einen Kühlmitteleinlass (16a-d) und einen Kühlmittelauslass (18a-d) hat,
- einen Kondensator (22a, 22b) der in einem zweiten Abschnitt (12b) des Kühlkreislaufs (12) angeordnet ist und einen Kühlmitteleinlass (24a, 24a', 24b, 24b') und einen Kühlmittelauslass (26a, 26b) hat,
- ein erstes Kühlkreislaufsteuerventil (36), das in dem Kühlkreislauf (12) zwischen dem Kühlmittelauslass (18a-d) des Verdampfers (14a-d) und dem Kühlmitteleinlass (24a, 24a', 24b, 24b') des Kondensators (22a, 22b) angeordnet ist, und
- ein zweites Kühlkreislaufsteuerventil (38), das in dem Kühlkreislauf (12) zwischen dem Kühlmittelauslass (26a, 26b) des Kondensators (22a, 22b) und dem Kühlmitteleinlass (16a-d) des Verdampfers (14a-d) angeordnet ist, wobei das erste und das zweite Kühlkreislaufsteuerventil (36, 38) in ihrem geschlossenen Zustand dazu eingerichtet sind, den ersten Abschnitt (12a) des Kühlkreislaufs (12) von dem zweiten Abschnitt (12b) Kühlkreislaufs (12) zu trennen, wobei der zweite Abschnitt (12b) des Kühlkreislaufs (12) in einem unbedruckten Bereich (40) des Flugzeugs angeordnet ist und der erste Abschnitt (12a) des Kühlkreislaufs (12) in einem bedruckten Bereich (42) des Flugzeugs angeordnet ist,
wobei dem ersten und dem zweiten Kühlkreislaufsteuerventil (36, 38) je ein Berstsicherheitsventil (66a, 66b) zugeordnet ist.

2. Flugzeug gemäß Anspruch 1,
wobei das Kühlsystem (10) ferner umfasst
- eine erste Ablassventilanordnung (70), die in ihrem geöffneten Zustand dazu eingerichtet ist, Kühlmittel aus dem ersten Abschnitt (12a) des Kühlkreislaufs (12) in die Flugzeugumgebung und/oder einen unbedruckten Bereich (40) des Flugzeugs abzulassen, und/oder
- eine zweite Ablassventilanordnung (50), die in ihrem geöffneten Zustand dazu eingerichtet ist, Kühlmittel aus dem zweiten Abschnitt (12b) des Kühlkreislaufs (12) in die Flugzeugumgebung und/oder einen unbedruckten Bereich (40) des Flugzeugs abzulassen.

3. Flugzeug gemäß Anspruch 1 oder 2,
wobei eine Steuereinrichtung (52) des Kühlsystems (10) dazu eingerichtet ist, das erste und/oder das zweite Kühlkreislaufsteuerventil (36, 38), die erste Ablassventilanordnung (70) und/oder die zweite Ablassventilanordnung (50) in Abhängigkeit mindestens eines der Steuereinrichtung (52) zugeführten Sensorsignals zu steuern, wobei das Sensorsignal für
- einen Druck des Kühlmittels in dem Kühlkreislauf (12) des Kühlsystems (10),
- eine Konzentration des Kühlmittels in der Umgebungsluft in dem bedruckten Bereich (42) des Flugzeugs,
- eine Menge des in dem Kühlkreislauf (12) des Kühlsystems (10) vorhandenen Kühlmittels,
- einen einen ordnungsgemäßen Betrieb des Kühlsystems (10) beeinträchtigenden Systemfehler und/oder
- einen vorbestimmten Betriebszustand des Flugzeugs charakteristisch ist.

4. Flugzeug gemäß einem der Ansprüche 1 bis 3,
wobei mindestens eine Komponente des Kühlsystems (10), die in einem bedruckten Bereich (42) des Flugzeugs installiert ist, eine Umhüllung (54) umfasst, wobei die Umhüllung (54) dazu eingerichtet ist, aus der mindestens einen Komponente des Kühlsystems (10) auslaufendes Kühlmittel aufzunehmen.

5. Flugzeug gemäß einem der Ansprüche 1 bis 4,
wobei eine Steuereinrichtung (52) des Kühlsystems (10) dazu eingerichtet ist, den Betrieb des Kühlsystems (10) beim Starten des Systems derart zu steuern, dass Kühlmittel in dem Kondensator (22a, 22b) verflüssigt wird, während das erste Kühlkreislaufsteuerventil (36) und das zweite Kühlkreislaufsteuerventil (38) geschlossen sind, um den ersten Abschnitt (12a) des Kühlkreislaufs (12) von dem zweiten Abschnitt (12b) des Kühlkreislaufs (12) zu trennen, bis die Menge des flüssigen Kühlmittel ausreichend ist, um ein Fluten von Kühlsystemkomponenten, die in dem Kühlkreislauf (12) stromabwärts einer Fördereinrichtung (42) zum Fördern von Kühlmittel durch den Kühlkreislauf angeordnet sind, mit flüssigem Kühlmittel zu erlauben.

6. Flugzeug gemäß einem der Ansprüche 1 bis 5,
wobei eine Steuereinrichtung (52) des Kühlsystems (10) dazu eingerichtet ist, die Zufuhr von Kühlmittel zu dem Verdampfer (14a-d) in Abhängigkeit eines Betriebszustands des Verdampfers (14a-d) derart zu steuern, dass eine trockene Verdampfung des Kühlmittels in dem Verdampfer (14a-d) stattfindet.

7. Flugzeug gemäß einem der Ansprüche 1 bis 6,
wobei eine Steuereinrichtung (52) des Kühlsystems (10) dazu eingerichtet ist, den Betrieb des Kühlsystems (10) beim Abschalten des Systems zu steuern, indem die Zufuhr von Kühlmittel zu dem Verdampfer (14a-d) unterbrochen wird, während eine Verflüssigung von Kühlmittel in dem Kondensator (22a, 22b) fortgesetzt wird, bis ein Druck des Kühlmittels in dem Kühlsystem (10) einen vorbestimmten Sollwert erreicht hat.

8. Flugzeug gemäß Anspruch 7,
wobei der vorbestimmte Sollwert des Drucks des Kühlmittels in dem Kühlsystem (10) geringer ist als ein Wert des Drucks des Kühlmittels in dem Kühlsystem (10) während eines normalen Betriebs des Kühlsystems (10).

9. Flugzeug gemäß Anspruch 7 oder 8,
wobei eine Steuereinrichtung (52) des Kühlsystems (10) dazu eingerichtet ist, das erste und das zweite Kühlkreislaufsteuerventil (36, 38) zu schließen, um den ersten Abschnitt (12a) des Kühlkreislauf (12) von dem zweiten Abschnitt (12b) des Kühlkreislaufs (12) zu trennen, wenn der Druck des Kühlmittels in dem Kühlsystem (10) den vorbestimmten Sollwert erreicht hat.

10. Flugzeug gemäß einem der Ansprüche 1 bis 9,
wobei eine Steuereinrichtung (52) des Kühlsystems (10) dazu eingerichtet ist, den Betrieb des Kühlsystems (10) beim Abschalten des Systems zu steuern, indem in dem Kondensator (22a, 22b) verflüssigtes Kühlmittel in einem Speicher (28) gespeichert wird, der in einem unbedruckten Bereich (40) des Flugzeugs installiert ist.

11. Flugzeug gemäß einem der Ansprüche 1 bis 10,
wobei der Kühlkreislauf (12) zwei erste Abschnitte (12a, 12a') umfasst, die zumindest teilweise in dem bedruckten Bereich (42) des Flugzeugs installiert sind, wobei ein Verdampfer (14a-d) in jedem der zwei ersten Abschnitte (12a, 12a') angeordnet ist, und wobei zwei erste Kühlkreislaufsteuerventile (36, 36') sowie zwei zweite Kühlkreislaufsteuerventil (38, 38') in ihrem geschlossenen Zustand dazu eingerichtet sind, die zwei ersten Abschnitte (12a, 12a') des Kühlkreislaufs (12) von dem zweiten Abschnitt (12b) des Kühlkreislaufs (12) zu trennen.

12. Flugzeug gemäß Anspruch 11,
wobei eine Steuereinrichtung (52) des Kühlsystems (10) dazu eingerichtet ist, die zwei ersten Kühlkreislaufsteuerventile (36, 36') und/oder die zwei zweiten Kühlkreislaufsteuerventile (38, 38') derart zu steuern, dass nur einer der zwei ersten Abschnitte (12a, 12a') des Kühlkreislaufs (12) mit dem zweiten Abschnitt (12b) des Kühlkreislaufs (12) verbunden ist, wenn die Menge des in dem Kühlkreislauf (12) zirkulierenden Kühlmittels nicht ausreichend ist, den Bedarf beider erster Kühlkreislaufabschnitte (12a, 12a') zu decken.

13. Flugzeug gemäß einem der Ansprüche 1 bis 12,
wobei das Kühlsystem (10) ferner ein mit dem ersten Kühlkreislaufsteuerventil (36) in Reihe geschaltetes erstes zusätzliches Kühlkreislaufsteuerventil (74) und/oder ein mit dem zweiten Kühlkreislaufsteuerventil (38) in Reihe geschaltetes zweites zusätzliches Kühlkreislaufsteuerventil (76) umfasst, und/oder
wobei mindestens eine berstempfindliche Kühlsystemkomponente zwischen einem entsprechenden Paar von zusätzlichen Berstventilen (82, 82') angeordnet ist.

14. Flugzeug gemäß einem der Ansprüche 1 bis 13,
wobei das Kühlsystem (10) ferner eine den Verdampfer (14a-d) umgehende Bypassleitung (84, 86, 84', 86') umfasst, wobei ein Druckablassventil (88, 88') und/oder ein Steuerventil (90, 90') dazu eingerichtet sein kann/können, die Kühlmittelströmung durch die Bypassleitung (84, 84', 86, 86') zu steuern.

## Revendications

1. Aéronef comprenant un système de refroidissement (10), dans lequel le système de refroidissement (10) comprend :
- un circuit de refroidissement (12) permettant la circulation d'un fluide frigorigène de type diphasique à travers celui-ci,
- un évaporateur (14a-d) disposé dans une première section (12a) du circuit de refroidissement (12) et comportant un orifice d'entrée (16a-d) de fluide frigorigène et un orifice de sortie (18a-d) de fluide frigorigène,
- un condenseur (22a, 22b) disposé dans une deuxième section (12b) du circuit de refroidissement (12) et comportant un orifice d'entrée (24a, 24a', 24b, 24b') de fluide frigorigène et un orifice de sortie (26a, 26b) de fluide frigorigène,
- une première soupape de commande (36) de circuit de refroidissement disposée dans le circuit de refroidissement (12) entre l'orifice de sortie (18a-d) de fluide frigorigène de l'évaporateur (14a-d) et l'orifice d'entrée (24a, 24a', 24b, 24b') de fluide frigorigène du condenseur (22a, 22b), et
- une deuxième soupape de commande (38) de circuit de refroidissement disposée dans le circuit de refroidissement (12) entre l'orifice de sortie (26a, 26b) de fluide frigorigène du condenseur (22a, 22b) et l'orifice d'entrée (16a-d) de fluide frigorigène de l'évaporateur (14a-d), les première et deuxième soupapes de commande (36, 38) de circuit de refroidissement dans leur état fermé étant adaptées pour rendre étanche la première section (12a) du circuit de refroidissement (12) par rapport à la deuxième section (12b) du circuit de refroidissement (12), dans lequel la deuxième section (12b) du circuit de refroidissement (12) est installée dans une région non pressurisée (40) de l'aéronef et la première section (12a) du circuit de refroidissement (12) est installée dans une région pressurisée (42) de l'aéronef,
dans lequel une soupape de sécurité (66a, 66b) pour éviter l'éclatement du conduit est associée à chacune parmi les première et deuxième soupapes de commande (36, 38) de circuit de refroidissement.

2. Aéronef selon la revendication 1,
dans lequel le système de refroidissement (10) comprend en outre :
- un premier agencement de soupape de prélèvement d'air (70) qui, dans son état ouvert, est adapté pour évacuer le fluide frigorigène de la première section (12a) du circuit de refroidissement (12) vers l'environnement de l'aéronef et/ou vers une région non pressurisée (40) de l'aéronef, et/ou
- un deuxième agencement de soupape de prélèvement d'air (50) qui, dans son état ouvert, est adapté pour évacuer le fluide frigorigène de la deuxième section (12b) du circuit de refroidissement (12) vers l'environnement de l'aéronef et/ou une région non pressurisée (40) de l'aéronef.

3. Aéronef selon la revendication 1 ou 2,
dans lequel un dispositif de commande (52) du système de refroidissement (10) est configuré pour commander la première et/ou la deuxième soupape(s) de commande (36, 38) de circuit de refroidissement, le premier agencement de soupape de prélèvement d'air (70) et/ou le deuxième agencement de soupape de prélèvement d'air (50) en fonction d'au moins un signal de capteur délivré vers le dispositif de commande (52), le signal de capteur indiquant au moins l'un parmi
- une pression du fluide frigorigène dans le circuit de refroidissement (12) du système de refroidissement (10),
- une concentration en fluide frigorigène dans l'air ambiant dans la région pressurisée (42) de l'aéronef,
- une quantité de fluide frigorigène présent dans le circuit de refroidissement (12) du système de refroidissement (10),
- une défaillance du système affectant le fonctionnement correct du système de refroidissement (10), et
- un état de fonctionnement prédéfini de l'aéronef.

4. Aéronef selon l'une quelconque des revendications 1 à 3,
dans lequel au moins un composant du système de refroidissement (10) qui est installé dans une région pressurisée (42) de l'aéronef comprend un boîtier (54), le boîtier (54) étant adapté pour recevoir le fluide frigorigène fuyant d'au moins un composant du système de refroidissement (10).

5. Aéronef selon l'une quelconque des revendications 1 à 4,
dans lequel un dispositif de commande (52) du système de refroidissement (10) est configuré pour commander le fonctionnement du système de refroidissement (10) sur démarrage du système d'une manière telle que le fluide frigorigène est liquéfié dans le condenseur (22a, 22b) alors que la première soupape de commande (36) de circuit de refroidissement et la deuxième soupape de commande (38) de circuit de refroidissement sont fermées de façon à séparer la première section (12a) du circuit de refroidissement (12) de la deuxième section (12b) du circuit de refroidissement (12) jusqu'à ce que la quantité de fluide frigorigène liquide soit suffisante pour permettre une submersion des composants du système de refroidissement qui sont disposés dans le circuit de refroidissement (12) en aval d'un dispositif de transport (34) pour transporter le fluide frigorigène à travers le circuit de refroidissement (12) avec le fluide frigorigène liquide.

6. Aéronef selon l'une quelconque des revendications 1 à 5,
dans lequel un dispositif de commande (52) du système de refroidissement (10) est configuré pour commander l'alimentation en fluide frigorigène vers l'évaporateur (14a-d) en fonction de l'état de fonctionnement de l'évaporateur (14ad) d'une manière telle qu'une évaporation complète du fluide frigorigène se produit dans l'évaporateur (14a-d).

7. Aéronef selon l'une quelconque des revendications 1 à 6,
dans lequel un dispositif de commande (52) du système de refroidissement (10) est configuré pour commander le fonctionnement du système de refroidissement (10) sur arrêt du système en interrompant l'alimentation en fluide frigorigène vers l'évaporateur (14a-d) tout en continuant la liquéfaction du fluide frigorigène dans le condenseur (22a, 22b) jusqu'à ce qu'une pression du fluide frigorigène dans le système de refroidissement (10) ait atteint une valeur établie prédéterminée.

8. Aéronef selon la revendication 7,
dans lequel la valeur établie prédéterminée de la pression du fluide frigorigène dans le système de refroidissement (10) est inférieure à une valeur de la pression du fluide frigorigène dans le système de refroidissement (10) pendant le fonctionnement normal du système de refroidissement (10).

9. Aéronef selon la revendication 7 ou 8,
dans lequel un dispositif de commande (52) du système de refroidissement (10) est configuré pour fermer les première et deuxième soupapes de commande (36, 38) de circuit de refroidissement de façon à séparer la première section (12a) du circuit de refroidissement (12) de la deuxième section (12b) du circuit de refroidissement (12) lorsque la pression du fluide frigorigène dans le système de refroidissement (10) a atteint la valeur établie prédéterminée.

10. Aéronef selon l'une quelconque des revendications 1 à 9,
dans lequel un dispositif de commande (52) du système de refroidissement (10) est configuré pour commander le fonctionnement du système de refroidissement (10) sur arrêt du système en stockant le fluide frigorigène qui est liquéfié dans le condenseur (22a, 22b) dans un accumulateur (28) qui est installé dans une région non pressurisée (40) de l'aéronef.

11. Aéronef selon l'une quelconque des revendications 1 à 10,
dans lequel le circuit de refroidissement (12) comprend deux premières sections (12a, 12a') qui sont au moins partiellement installées dans la région pressurisée (42) de l'aéronef, dans lequel un évaporateur (14a-d) est disposé dans chacune des deux premières sections (12a, 12a'), et
dans lequel deux premières soupapes de commande (36, 36') de circuit de refroidissement de même que deux deuxièmes soupapes de commande (38, 38') de circuit de refroidissement, dans leur état fermé, sont adaptées pour rendre étanche les deux premières sections (12a, 12a') du circuit de refroidissement (12) par rapport à la deuxième section (12b) du circuit de refroidissement (12).

12. Aéronef selon la revendication 11,
dans lequel un dispositif de commande (52) du système de refroidissement (10) est configuré pour commander les deux premières soupapes de commande (36, 36') de système de refroidissement et/ou les deux deuxièmes soupapes de commande (38, 38') de circuit de refroidissement d'une manière telle que seule l'une des deux premières sections (12a, 12a') du système de refroidissement (12) est connectée à la deuxième section (12b) du circuit de refroidissement (12) si la quantité de fluide frigorigène circulant dans le circuit de refroidissement (12) n'est pas suffisante pour satisfaire la demande des deux premières sections (12a, 12a') de circuit de refroidissement.

13. Aéronef selon l'une quelconque des revendications 1 à 12,
dans lequel le système de refroidissement (10) comprend en outre une première soupape de commande (74) additionnelle de circuit de refroidissement connectée en série avec la première soupape de commande (36) de circuit de refroidissement et/ou une deuxième soupape de commande (76) additionnelle de circuit de refroidissement connectée en série avec la deuxième soupape de commande (38) de circuit de refroidissement, et/ou
dans lequel au moins un composant du système de refroidissement qui est susceptible de faire éclater un conduit est disposé entre une paire respective de soupapes (82, 82') additionnelles empêchant l'éclatement d'un conduit.

14. Aéronef selon l'une quelconque des revendications 1 à 13,
dans lequel le système de refroidissement (10) comprend en outre une conduite de dérivation (84, 86, 84', 86') contournant l'évaporateur (14a-d), dans lequel une soupape de décharge (88, 88') et/ou une soupape de commande (90, 90') peut être adaptée pour commander la circulation du fluide frigorigène à travers la conduite de dérivation (84, 84', 86, 86').
